# EUROPÄISCHE PATENTSCHRIFT

(11) **EP 2 215 904 B1**
(45) Veröffentlichungstag und Bekanntmachung des Hinweises auf die Patenterteilung: **27.06.2018**
(21) Anmeldenummer: 10005116.8
(22) Anmeldetag: 04.09.2008
(51) Int. Cl.: A01G 3/08, A01D 46/26, A01G 17/00

(54) **Vorrichtung zum Ausdünnen von Obstbäumen**
Device for thinning out fruit trees
Dispositif d'élagage d'arbres fruitiers

(30) Priorität: 05.09.2007 DE 102007042235
(43) Veröffentlichungstag der Anmeldung: 11.08.2010
(62) Teilanmeldung aus: 08785825.4
(73) Patentinhaber: Betz, Adolf, 88693 Deggenhausertal (DE)
(72) Erfinder: Betz, Adolf, 88693 Deggenhausertal (DE)

(56) Entgegenhaltungen:
- DE-A1- 4 103 915
- FR-A1- 2 476 978
- FR-A1- 2 494 081
- FR-A1- 2 827 118

## Beschreibung

Die vorliegende Erfindung betrifft eine Vorrichtung zum Ausdünnen von Obstbäumen oder anderen mit Ästen und Zweigen versehenen Fruchtgehölzen nach der im Oberbegriff von Anspruch 1 näher definierten Art.
Mechanische Ausdünnverfahren haben den Vorteil, dass das Ausdünnen auf eine einfache umweltschonende Weise durchgeführt werden kann. Die DE 41 03 915 C2 offenbart eine Vorrichtung zum Ausdünnen von Obstbäumen oder anderen mit Ästen und Zweigen versehenen Fruchtgehölzen, durch Verringerung der Anzahl von Blüten und oder Fruchtansätzen wobei ein langgestreckter Körper um seine Drehachse rotiert und dabei mehrere peitschenartige flexible Zinken in den Baum eingreifen, wodurch ein Teil der Blüten oder Fruchtansätze abgestreift werden. Bei einem Verschleiß der peitschenartigen Zinken ist die Vorrichtung aufwändig wieder in Stand zu setzen.
Der vorliegenden Erfindung liegt die Aufgabe zu Grunde eine Vorrichtung zum Ausdünnen zu schaffen, bei welcher der langgestreckte Körper mit den peitschenartigen Zinken auf einfache Weise, kostengünstig herzustellen ist.

Die Aufgabe wird mit einer, die kennzeichnenden Merkmale des Hauptanspruchs, aufweisenden, gattungsgemäßen Vorrichtung zum Ausdünnen gelöst.
Der langgestreckte, um seine Drehachse drehbare Körper ist über Verbindungsmittel mit einem weiteren Bauteil verbindbar. Das weitere Bauteil ist dabei so ausgestaltet, dass ein oder mehrere peitschenartige Zinken beim Verbinden des weiteren Bauteils mit dem um seine Drehachse drehbaren Körper kraftschlüssig am oder im weiteren Bauteil gehalten werden. Das weitere Bauteil ist vorzugsweise als Kunststoff Bauteil ausgeführt, es besteht jedoch auch die Möglichkeit, das weitere Bauteil aus einem metallischen Werkstoff herzustellen. Vorzugsweise wird das weitere Bauteil in einem Spritzgussprozess hergestellt. In einer Ausführungsform weist das weitere Bauteil hierfür eine erste Anlage auf, welche beim Verbinden des weiteren Bauteils am drehbaren Körper anliegt. Das weitere Bauteil weist eine zweite Anlage auf, welche im verbundenen Zustand des weiteren Bauteils mit dem drehbaren Körper einen Abstand zur ersten Anlage bildet, wobei der Abstand so ausgebildet ist, dass mindestens ein Zinken zwischen den drehbaren Körper und dem weiteren Bauteil geklemmt wird, wobei die Klemmkraft so bemessen ist, dass der Zinken beim Betrieb der Vorrichtung am drehbaren Körper gehalten bleibt. Vorzugsweise sind die Zinken aus einer Kunststoffschnur hergestellt. Vorzugsweise weist das weitere Bauteil eine erste Öffnung eine zweite Öffnung und die zweite Anlage auf, wobei durch die erste Öffnung der peitschenartige Zinken eingeführt ist, entlang der zweiten Anlage zwischen dem weiteren Bauteil und dem drehbaren Körper verläuft und aus der zweiten Öffnung austritt. In einer Ausgestaltungsform weist die zweite Anlage die Form eines Kreisabschnittes auf und die erste Öffnung und die zweite Öffnung sind an den Enden des Kreisabschnittes angeordnet, wodurch eine einfache Montage des peitschenartigen Zinkens gewährleistet ist. In einer weiteren Ausgestaltungsform weist die zweite Anlage zusätzlich eine Rille auf, in welcher ein fadenartiger Zinken bei der Montage geführt wird. Dadurch ist es möglich einen verschlissenen Zinken durch lösen der Verbindungsmittel, welche das weitere Bauteil mit dem drehbaren Körper verbinden, auf einfache Weise zu entfernen und durch einen neuen Zinken zu ersetzen.

In einer weiteren Ausführungsform ist der drehbare Körper hohl ausgebildet und der Zinken weist an seinem, dem drehbaren Körper zugewandtem Ende ein formschlüssiges Bauteil, beispielsweise einen Befestigungsclip, auf, welcher so mit dem drehbaren Körper zusammenwirkt, dass der Zinken formschlüssig im drehbaren Körper gehalten ist. Hierbei kann das formschlüssige Bauteil einstückig mit dem Zinken ausgebildet sein, es besteht aber auch die Möglichkeit, dass das Bauteil mit dem Zinken stoffschlüssig oder mechanisch, beispielsweise über ein Gewinde im formschlüssigen Bauteil, verbunden ist. Es besteht die Möglichkeit, dass der drehbare Körper mindestens eine Öffnung aufweist in welche der Befestigungsclip eingreift oder einrastet. Beim ersetzen eines verschlissenen Zinkens besteht die Möglichkeit den Clip durch zusammendrücken zu entfernen, es besteht aber auch die Möglichkeit, dass der Zinken vom Clip abgetrennt wird und der Clip in den hohlen drehbaren Körper geschoben wird. Die Öffnung kann kreisförmig ausgebildet sein. Es besteht auch die Möglichkeit die Öffnung nicht kreisförmig auszubilden, wodurch der Befestigungsclip so ausgeführt sein kann, dass sich der Befestigungsclip mit dem Zinken nicht im drehbaren Körper verdrehen kann. Dies ist besonders vorteilhaft, wenn der Zinken nicht gerade sondern mäander-förmig ausgebildet ist und mit weiteren Zinken zusammenwirkt um eine bestmögliche Überdeckung zu erreichen.
Es besteht auch die Möglichkeit den drehbaren Körper nicht hohl sondern sternförmig auszubilden, wobei in den Strahlen des sternförmigen Körpers Öffnungen angeordnet sind, in welche beispielsweise Befestigungsclips eingreifen. Es besteht die Möglichkeit, das sternförmige Bauteil aus einem Strangpressprofil herzustellen, oder das sternförmige Bauteil als Spritzgussbauteil beispielsweise aus Kunststoff herzustellen, wobei mehrere dieser Sternförmigen Bauteile auf eine Verstärkung, beispielsweise ein Metallrohr, aufgepresst werden können. Es besteht auch die Möglichkeit, dass durch die Öffnung im Strahl des sternförmigen Bauteils ein Zinken geschoben wird, wobei der Zinken nach der Montage auf jeder Seite der Öffnung im sternförmigen Bauteil, eine Verdickung oder Verformung aufweist, welche auf formschlüssige Weise den Zinken am drehbaren Körper hält. Die Verdickung kann beispielsweise als Klemmhülse ausgeführt sein, welche beidseitig der Öffnung am Zinken angebracht ist. Es besteht auch die Möglichkeit den Zinken aus einem Kuststoffmaterial auszubilden, welches sich unter Einwirkung von Wärme plastisch verformen lässt, wobei die Verdickungen oder Verformungen durch Zufuhr von Wärme beispielsweise mit einer heißen Zange, hergestellt werden kann.

In einer weiteren Ausgestaltungsform wird der Zinken in den hohlen drehbaren Körper geschoben, wobei sich innerhalb des hohlen drehbaren Körpers ein kernförmiges Bauteil befindet, welches eine durchgehende Öffnung aufweist, durch welche der Zinken bei der Montage geschoben wird. Durch eine Relativdrehung zwischen dem drehbaren Körper und dem kernförmigen Bauteil wird der Zinken so verdreht, dass er im drehbaren Körper gehalten ist. Vorzugsweise ist die durchgehende Öffnung im kernförmigen Bauteil im Durchmesser größer als der Zinken, wodurch eine Relativdrehung möglich ist. Über eine Haltevorrichtung wird das kernförmige Bauteil am zurückdrehen gehindert. Zum Auswechseln des Zinkens ist das kernförmige Bauteil zurückzudrehen, wodurch der Zinken entfernt werden kann.

In einer weiteren Ausführungsform weist der drehbare Körper eine nicht rotationssymmetrische Hülle auf, welche beispielsweise als Sechseck ausgebildet ist, wobei eine Hülse ebenfalls die nicht rotationssymmetrische Form aufweist, wodurch die Hülse über den drehbaren Körper gesteckt werden kann und durch die nicht rotationssymmetrische Hülle die Drehbewegung des drehbaren Körpers auf die Hülse übertragbar ist. Jede nicht rotationssymmetrische Form ist hierfür geeignet. Die Hülse ist einstückig mit einem oder mehreren Zinken vorzugsweise als Spritzgussbauteil aus Kunststoff ausgebildet. Es besteht auch die Möglichkeit die Hülse und den Zinken mehrstückig auszubilden und stoffschlüssig, zum Beispiel durch kleben oder schweißen, oder mechanisch zu verbinden.

In einer weiteren Ausgestaltungsform weist der drehbare Körper mindestens eine Öffnung auf, in welche der Zinken eingeführt und stoffschlüssig beispielsweise durch kleben, verbunden ist. Vorzugsweise ist der Zinken hierbei aus Kunststoff und der drehbare Körper ist nicht hohl sondern voll ausgebildet, um die Klebefläche zu vergrößern. Hierbei ragt der Zinken auf jeder Seite des drehbaren Körpers aus dem drehbaren Körper.

In einer weiteren Ausgestaltung ist der drehbare Körper hohl ausgebildet und weist eine Öffnung auf, durch welche der Zinken in den hohlen drehbaren Körper ragt, wobei in den hohlen Körper eine Wärmequelle geschoben wird, welche den Zinken innerhalb des drehbaren Körpers plastisch verformt. Die Wärmequelle wird nach der Montage des Zinkens wieder entfernt.
Bei den obigen Ausführungsformen sind die Zinken vorzugsweise aus einem Kunststoffmaterial. Hierbei können die Zinken gerade oder nicht gerade sondern entlang ihrer Längsachse gebogen oder wellig ausgeführt sein, wodurch bei Anordnung mehrerer Zinken auf dem drehbaren Körper ein flächendeckender Eingriff in den Obstbaum erfolgt. Vorzugsweise weisen die Enden der Zinken zueinander und die Zinken sind in Form eines Kreissegmentes oder mäanderförmig ausgebildet. Im Übrigen kann der Aufbau wie in der Die DE 41 03 915 C2 erfolgen. Weitere Merkmale sind der Figurenbeschreibung zu entnehmen, wobei die Figuren 4, 5, 6, 7, 8, 9 und 10 Ausführungsformen zeigen, die nicht Gegenstand der vorliegenden Erfindung sind, sondern lediglich der Erklärung dienen. Es zeigen:

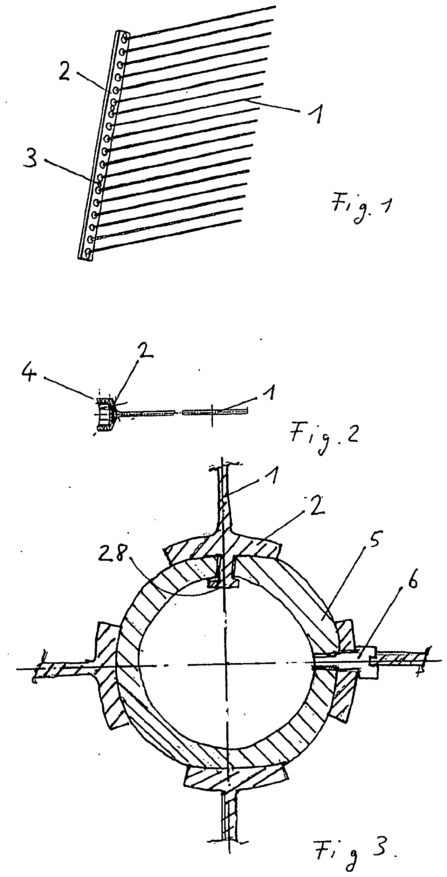

- Figur 1:: eine räumliche Darstellung einer Leiste mit abgegossenen Zinken.
- Figur 2:: eine Ansicht der Figur 1 im Schnitt.
- Figur 3:: eine Schnittdarstellung der montierten Leiste der Figur 1.

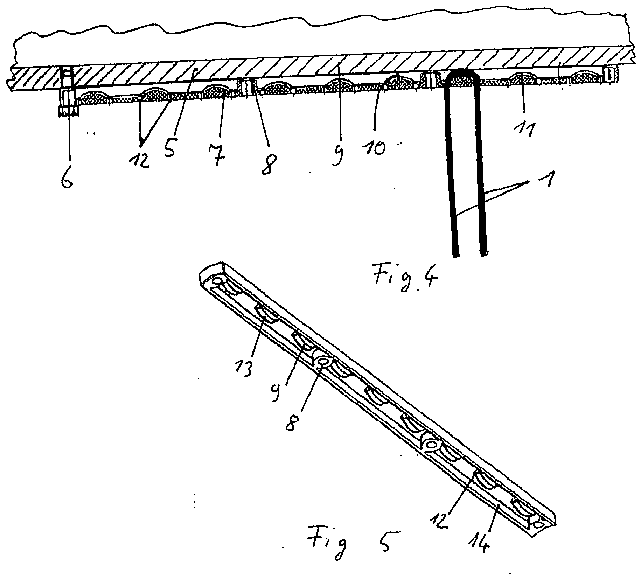

- Figur 4:: eine Schnittdarstellung eines kraftschlüssigen gehaltenen Zinkens.
- Figur 5:: eine räumliche Darstellung des weiteren Bauteils der Figur 4.

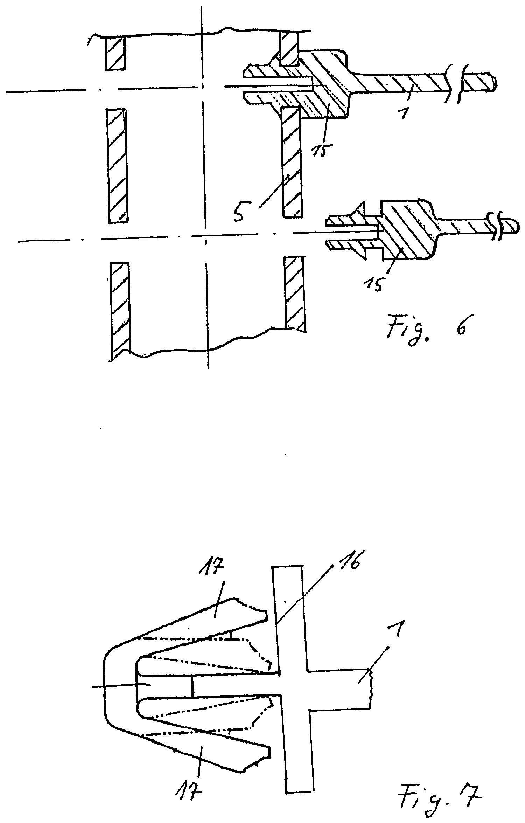

- Figur 6:: eine Schnittdarstellung eines montierten Befestigungsclip mit Zinken.
- Figur 7:: eine Detaildarstellung des Befestigungsclips der Figur 6.

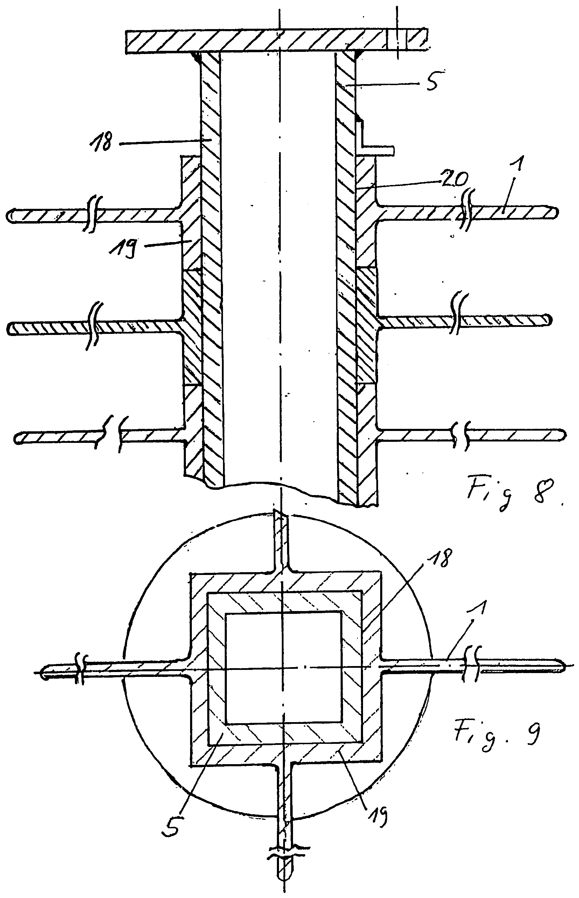

- Figur 8:: eine Schnittdarstellung eines Anordnung mit nicht rotationssymmetrischer Hülle.
- Figur 9:: eine Schnittdarstellung der Anordnung der Figur 8 in der Draufsicht.

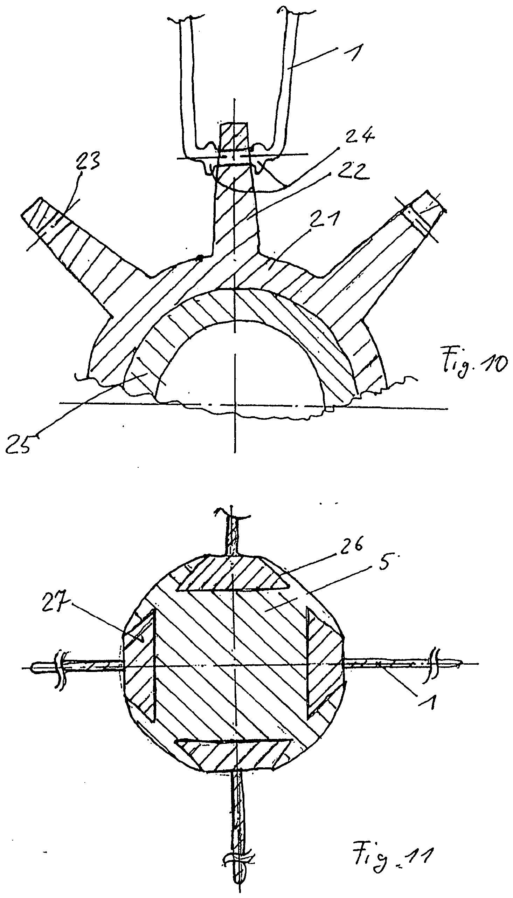

- Figur 10:: eine Schnittdarstellung einer Ausführung mit sternförmigem Bauteil
- Figur 11:: Eine Schnittdarstellung mit formschlüssig gehaltener Leiste.
- Figur 12:: Eine Darstellung einer Leiste mit am Ende gebogenem Verlauf.
- Figur 13:: Eine räumliche Darstellung des drehbaren Körpers mit montierten Leisten nach Figur 12.

### Figur 1:

Die Zinken 1 sind einstückig mit der Leiste 2 verbunden. Die Leiste 2 wird mittels nicht dargestellten Schrauben durch die Öffnungen 3 auf den nicht dargestellten drehbaren Körper geschraubt. Die Leiste 2 besteht mit den Zinken 1 aus einem Kunststoffmaterial und wird vorzugsweise mittels Spritzgussverfahren hergestellt.
Die Zinken 1 können sich rechtwinklig von der Leiste 2 erstrecken, vorzugsweise weisen die Zinken jedoch einen mäanderförmigen oder kreissegmentartigen Verlauf auf, wodurch beim Eintauchen in das Fruchtgehölz eine bessere Überdeckung und damit eine vollständigere Ausdünnung erreicht wird. Vorzugsweise sind die Zinken 1 an der Verbindungsstelle mit der Leiste 2 dicker und mit einem Radius ausgeführt. Über die gesamte Länge des drehbaren Körpers sind mehrere Leisten angebracht, wodurch bei Bedarf nur die Leiste ausgetauscht werden muss, welche verschlissen ist.

### Figur 2:

Die Leiste 2 ist U-förmig ausgebildet und weist an Ihrer Oberfläche 4 eine dem drehbaren Körper angepasste Form beispielsweise eine Kreisform auf.

### Figur 3:

Die Leisten 2 sind auf den drehbaren Körper 5 mittels Schrauben 6 geschraubt. Am Umfang des drehbaren Körpers sind mehrere Leisten 2, vorzugsweise sechs gleichmäßig verteilt angeordnet. Es besteht aber auch die Möglichkeit vier oder acht Leisten am Umfang anzuordnen. Es besteht auch die Möglichkeit die Leisten mit Dornen 28 zu versehen, welche an Ihrem der Leiste abgewandten Ende eine Verdickung aufweisen, wobei diese Dornen 28 in Langlöcher im drehbaren Körper 5 eingreifen, wobei die Langlöcher eine Erweiterung aufweisen durch welche der Dorn 28 mit seiner Verdickung eingeführt wird und durch verschieben entlang des Langloches die Leiste 2 befestigt wird. Durch eine Verschiebesicherung, beispielsweise eine Schraube wird die Leiste 2 anschließend ortsfest auf dem drehbaren Körper gehalten.

### Figur 4:

Ein weiteres Bauteil 7 ist mittels Schrauben 6 mit dem drehbaren Körper 5 verbunden. Dabei liegt die Anlage 8 auf dem drehbaren Körper 5 auf und die Anlage 9 weist einen Abstand 10 zur Anlage 9 und somit zum drehbaren Körper 5 auf. Die Oberfläche 11 weist die Form eines Kreissegmentes auf. Der Abstand 10 ist so bemessen, dass der Zinken 1 im montierten Zustand zwischen dem weiteren Bauteil 7 und dem drehbaren Körper 5 kraftschlüssig gehalten ist. Die Öffnungen 12 sind am Ende der Oberfläche 11 angeordnet wobei bei der Montage der Zinken 1 durch die eine Öffnung 12 eingeführt wird, entlang der Oberfläche 11 gleitet und die andere Öffnung 12 verlässt. Die Oberfläche 11 weist zusätzlich eine Rille 13 auf in welcher der Zinken 1 geführt wird.

### Figur 5:

Das weitere Bauteil 7 weist einen umlaufenden Steg 14 auf welcher mit der Anlage 8 am drehbaren Körper 5 anliegt. Der Zinken wird in der Rille 13 geführt wobei die Oberfläche 4 so angeordnet ist, dass jeweils zwei Zinken nebeneinander angeordnet werden können.

### Figur 6:

Der Zinken 1 ist einstückig mit einem Befestigungsclip 15 vorzugsweise als Spritzgussbauteil aus Kunststoff hergestellt. Im montierten Zustand rastet der Befestigungsclip 15 formschlüssig im drehbaren Körper 5 ein. Es besteht auch die Möglichkeit den Zinken 1 in den Befestigungsclip 15 einzukleben, oder über ein Gewinde im Befestigungsclip zu befestigen.

### Figur 7:

Der Befestigungsclip 15 weist eine Anlagefläche 16 und mindestens zwei Gegenhalter 17 auf, wodurch der Befestigungsclip 15 im drehbaren Körper 5 einrastet

### Figur 8:

Der drehbare Körper 5 weist eine nicht rotationssymmetrische Oberfläche 18 auf, über welcher sich eine Hülse 19 mit einer der Oberfläche 18 entsprechenden Innenfläche 20 befindet, wodurch die Drehbewegung des drehbaren Körpers 5 auf die Hülse 19 übertragbar ist. Die Hülse 19 ist einstückig mit Zinken 1 vorzugsweise als Spritzgussbauteil aus Kunststoff hergestellt. Es besteht auch die Möglichkeit den Zinken 1 in die Hülse 19 einzukleben, oder über ein Gewinde in der Hülse zu befestigen. Da mehrere Hülsen 19 auf dem drehbaren Körper 5 angeordnet sind, kann im Falle eines verschlissenen Zinkens 1 auch nur eine Hülse 19 ausgetauscht werden.

### Figur 9:

An der Hülse 19 sind am Umfang gleichmäßig Zinken 1 verteilt angeordnet, wobei vorzugsweise sechs Zinken 1 angeordnet sind. Es besteht auch die Möglichkeit vier Zinken 1 anzuordnen, wobei in diesem Fall der drehbare Körper 5 mit einer quadratischen Oberfläche 18 ausgebildet ist. Bei Verwendung von sechs Zinken am Umfang ist die Oberfläche 18 vorzugsweise als Sechseck ausgebildet.

### Figur 10:

Ein sternförmiges Bauteil 21 weist Strahlen 22 auf, welche Öffnungen 23 aufweisen in welchen Zinken 1 gehaltert sind. Auf jeder Seite der Öffnung weist die Zinke 1 Verformungen 24 auf, welche bei einer Zinke aus Thermoplast beispielsweise mittels Zufuhr von Wärme als plastische Verformung ausgebildet sein kann. Es besteht auch die Möglichkeit anstatt der plastischen Verformung 24 Klemmhülsen zur Vergrößerung des Durchmessers zu verwenden. Bei Verwendung eines von der Festigkeit nicht ausreichenden Materials für das sternförmige Bauteil, besteht die Möglichkeit innerhalb des sternförmigen Bauteils 21 eine Verstärkung 25 beispielsweise in Form eines Rohres anzuordnen.

Bei Verwendung eines durchgängigen Rohres besteht die Möglichkeit das sternförmige Bauteil 21 kürzer als die Gesamtlänge des drehbaren Körpers 5 auszubilden und mehrere sternförmige Bauteile 21 zu verwenden. Das sternförmige Bauteil kann aus einem Spritzgussbauteil aus Metall oder Kunststoff bestehen. Es besteht auch die Möglichkeit das sternförmige Bauteil aus Winkelblechen auszubilden, welche an eine Verstärkung 25 angeschraubt sind.

### Figur 11:

Der drehbare Körper 5 weist Längsführungen 26 auf, welche beispielsweise als Schwalbenschwanzführungen ausgebildet sind. In diesen Längsführungen 26 sind Leisten 27 mit entsprechender Gegenfläche angeordnet, wodurch die Leisten 27 in den Längsführungen 26 gehalten sind. Die Leisten sind einstückig mit den Zinken 1 ausgebildet. Über der Länge des drehbaren Körpers 5 können mehrere Leisten 26 angeordnet sein.

### Figur 12:

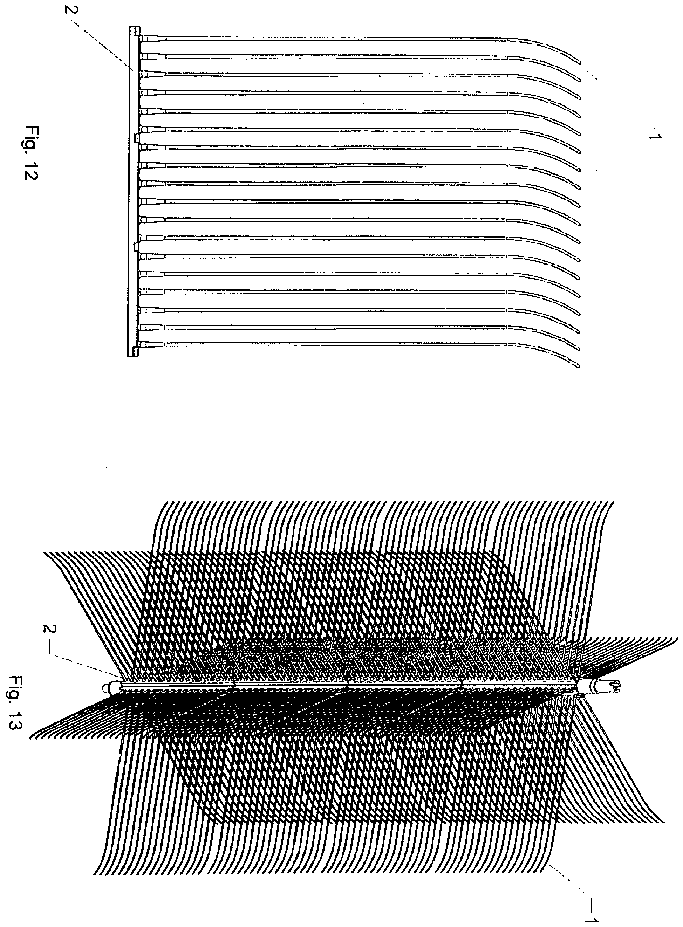

Die Leiste 2 nach Figur 12 zeigt gerade verlaufende Zinken 1, welche am äußeren Ende einen gebogenen Verlauf aufweisen. Dadurch ist es möglich, mehrere Zinken am drehbaren Körper 5 so anzuordnen, dass die einen Enden der Zinken nach oben, das heißt parallel zur Drehachse des drehbaren Körpers in eine erste Richtung und die Zinken 1 der anderen Leiste 2 in der entgegengesetzten Richtung angeordnet werden, wodurch diese Enden sich überschneiden, wodurch eine verbesserte Ausdünnwirkung erzielt wird. Der hintere Ansatz des Zinkens 1 ist vom Durchmesser stärker ausgeführt und läuft zum Ende des Zinkens konisch aus, wodurch die Stabilität des Zinkens verbessert wird.

### Figur 13:

Figur 13 zeigt den räumlichen Aufbau des drehbaren Körpers 5 mit Leisten 2 nach Figur 12, welche so angeordnet sind, dass die Enden sich überschneiden. Die Zinken 1 weisen hierfür einen ersten geraden Bereich und deren Ende einen gebogenen Bereich auf.

### Bezugszeichen

- 1: Zinken
- 2: Leiste
- 3: Öffnung
- 4: Oberfläche
- 5: Drehbarer Körper
- 6: Schrauben
- 7: Weiteres Bauteil
- 8: Anlage
- 9: Anlage
- 10: Abstand
- 11: Oberfläche
- 12: Öffnung
- 13: Rille
- 14: Steg
- 15: Befestigungsclip
- 16: Anlagefläche
- 17: Gegenhalter
- 18: Oberfläche
- 19: Hülse
- 20: Innenfläche
- 21: Sternförmiges Bauteil
- 22: Strahlen
- 23: Öffnung
- 24: Verformung
- 25: Verstärkung
- 26: Längsführung
- 27: Leiste

## Patentansprüche

1. Obstbaumausdünnvorrichtung zum Verringern der Anzahl von Blüten und oder Fruchtansätzen mit einem langgestreckten um seine Drehachse drehbaren Körper (5) und peitschenartigen flexiblen Zinken (1), **dadurch gekennzeichnet, dass** die flexiblen Zinken (1) mit einer Leiste (2) einstückig ausgeführt sind, wobei die Leiste (2) drehfest mit dem drehbaren Körper (5) verbunden ist, wobei die Leiste entlang der Drehachse des Körpers angeordnet ist und vollständig um die Drehachse des Körpers (5) drehbar ist.

2. Obstbaumausdünnvorrichtung nach Anspruch 1, **dadurch gekennzeichnet, dass** die Leiste (2) und die Zinken (1) aus einem Kunststoffmaterial vorzugsweise mittels Spritzgussverfahren hergestellt sind.

3. Obstbaumausdünnvorrichtung nach Anspruch 1, **dadurch gekennzeichnet, dass** die Leiste (2) mittels Schrauben auf den drehbaren Körper (5) geschraubt ist.

4. Obstbaumausdünnvorrichtung nach Anspruch 1, **dadurch gekennzeichnet, dass** am drehbaren Körper (5) mehrere Leisten (2) angebracht sind.

5. Obstbaumausdünnvorrichtung nach Anspruch 1, **dadurch gekennzeichnet, dass** die Leiste (2) U-förmig ausgebildet ist

6. Obstbaumausdünnvorrichtung nach Anspruch 1, **dadurch gekennzeichnet, dass** die Zinken (1) an der Verbindungsstelle zur Leiste (2) dicker und mit einem Radius ausgeführt sind.

7. Obstbaumausdünnvorrichtung nach Anspruch 1, **dadurch gekennzeichnet, dass** die Leiste (2) an Ihrer Oberfläche (4) eine dem drehbaren Körper (5) angepasste Oberfläche aufweist.

8. Obstbaumausdünnvorrichtung nach Anspruch 1, **dadurch gekennzeichnet, dass** die Leiste (2) Dornen (28) aufweist, welche an Ihrem der Leiste (2) abgewandten Ende eine Verdickung aufweisen, wobei diese Dornen (28) in Langlöcher im drehbaren Körper (5) eingreifen, wobei die Langlöcher eine Erweiterung aufweisen durch welche der Dorn (28) mit seiner Verdickung eingeführt wird und durch verschieben entlang des Langloches die Leiste (2) befestigt wird.

9. Obstbaumausdünnvorrichtung nach Anspruch 1, **dadurch gekennzeichnet, dass** der drehbare Körper (5) Längsführungen (26) aufweist, welche beispielsweise als Schwalbenschwanzführungen ausgebildet sind, wobei in diesen Längsführungen (26) Leisten (27) mit entsprechender Gegenfläche angeordnet sind, wodurch die Leisten (27) in den Längsführungen (26) gehalten sind.

10. Obstbaumausdünnvorrichtung nach Anspruch 1, **dadurch gekennzeichnet, dass** die Zinken vom drehbaren Körper (5) weg einen ersten geraden Bereich aufweisen und am äußeren Ende einen gebogenen Bereich aufweisen.

11. Obstbaumausdünnvorrichtung nach Anspruch 10, **dadurch gekennzeichnet, dass** die einen Enden der auf einer Seite des drehbaren Körpers angeordneten Zinken (1) nach oben, das heißt parallel zur Drehachse des drehbaren Körpers (5) in eine erste Richtung und die Enden der auf einer anderen Seite des drehbaren Körpers angeordneten Zinken (1) in der entgegengesetzten Richtung angeordnet sind.

12. Obstbaumausdünnvorrichtung nach Anspruch 10, **dadurch gekennzeichnet, dass** ein hinterer Ansatz des Zinkens (1) einen größeren Durchmesser aufweist und zum Ende des Zinkens konisch ausläuft.

13. Obstbaumausdünnvorrichtung nach Anspruch 1, **dadurch gekennzeichnet**, der Zinken (1) in einem Spritzgussprozess hergestellt ist und als Kunststoffbauteil ausgeführt ist, wobei der Zinken (1) gerade entlang seiner Längsachse ausgeführt ist, oder der Zinken (1) entlang seiner Längsachse in einem ersten Bereich gerade ausgeführt ist und in einem zweiten Bereich an seinem Ende einen gebogenen Verlauf aufweist.

## Claims

1. Device for thinning fruit trees suitable for reducing the number of blossoms and/or fruit buds, featuring a body of elongated shape that rotates around ist rotation axis (5) and flexible whip-like prongs (1), **characterized in that** the flexible prongs (1) and a bar (2) form one single piece, where the bar is rotationally fixed to the rotatable body (5), where the bar is positioned along the rotating axis of the body and rotates completely around the rotatable axis of the body (5).

2. Device for thinning fruit trees according to Claim 1, **characterized in that** the bar (2) and the prongs (1) are made of plastic material, preferably produced by injection molding.

3. Device for thinning fruit trees according to Claim 1, **characterized in that** the bar (2) is screwed to the rotatable body (5) by means of screws.

4. Device for thinning fruit trees according to Claim 1, **characterized in that** the rotatable body (5) features several prongs (2).

5. Device for thinning fruit trees according to Claim 1, **characterized in that** the bar (2) is U-shaped.

6. Device for thinning fruit trees according to Claim 1, **characterized in that** the prongs (1) are thicker at the junction with the bar (2) and feature a radius.

7. Device for thinning fruit trees according to Claim 1, **characterized in that** the bar (2) features a surface suitable for the rotatable body (5) on its surface (4).

8. Device for thinning fruit trees according to Claim 1, **characterized in that** the bar (2) features tines (28), which present a thickening on the side facing the bar (2), where the tines (28) are inserted in the slot holes featured on the rotatable body (5), where the slot holes present an opening through which the tine (28) is inserted from its thicker side and the bar (2) is fixed by dragging along the slot hole.

9. Device for thinning fruit trees according to Claim 1, **characterized in that** the rotatable body (5) features longitudinal guiding slot (26), which, for example, are shaped as dovetail guiding slots, where the bars (27) are inserted in these longitudinal guiding slots (26) with relevant countersurface so that the bars (27) are kept inside the longitudinal guiding slots (26).

10. Device for thinning fruit trees according to Claim 1, **characterized in that** the prongs present an initial straight portion starting from the rotatable body (5) and a curved portion towards the external end.

11. Device for thinning fruit trees according to Claim 10, **characterized in that**, the tips of the prongs (1) on one side of the rotatable body towards the top, i.e. parallel to the rotating axis of the rotatable body (5), are positioned in one direction and the tips of the prongs (1) on the other side of the rotatable body are positioned in the opposite direction.

12. Device for thinning fruit trees according to Claim 10, **characterized in that** the back of the prong (1) presents a larger diameter which reduces towards the tip of the prong in a cone shape.

13. Device for thinning fruit trees according to Claim 1, **characterized in that** the prong (1) is produced by injection molding and made as a plastic component, where the prong (1) features a straight shape along its longitudinal axis, or where the prong (1) has a straight shape along its longitudinal axis in the first part and presents a curved shape in the second portion towards the end.

## Revendications

1. Dispositif de production fruitière à souris fine servant à réduire le nombre de fleurs et ou de jeunes fruits équipé d'un corps allongé pivotant autour de son axe rotatif (5) et de dents flexibles effectuant un mouvement de fouet (1), **caractérisé en ce que** les dents flexibles (1) forment une seule pièce avec une barre, ladite barre (2) étant reliée de manière fixe au corps pivotant (5) et disposée le long de l'axe rotatif du corps et pivotant entièrement autour de l'axe rotatif du corps (5).

2. Dispositif de production fruitière à souris fine selon la revendication 1, **caractérisé en ce que** la barre (2) et les dents (1) sont fabriquées en matière plastique, de préférence en faisant appel au procédé de moulage par injection.

3. Dispositif de production fruitière à souris fine selon la revendication 1, **caractérisé en ce que** la barre (2) est vissée sur le corps pivotant (5) au moyen de vis.

4. Dispositif de production fruitière à souris fine selon la revendication 1, **caractérisé en ce que** plusieurs barres (2) sont montées sur le corps pivotant (5).

5. Dispositif de production fruitière à souris fine selon la revendication 1, **caractérisé par** une barre (2) en forme de U.

6. Dispositif de production fruitière à souris fine selon la revendication 1, **caractérisé en ce que** les dents (1) sont plus épaisses au point de liaison avec la barre (2) et conçues avec un rayon.

7. Dispositif de production fruitière à souris fine selon la revendication 1, **caractérisé en ce que** la barre (2) présente à sa surface (4) une surface adaptée au corps pivotant (5).

8. Dispositif de production fruitière à souris fine selon la revendication 1, **caractérisé en ce que** la barre (2) est pourvue de mandrins (28), présentant un renflement en leur extrémité opposée à la barre (2), lesdits mandrins (28) s'imbriquant dans les rainures du corps pivotant (5), lesdites rainures présentant une extension à travers laquelle le mandrin (28) est introduit avec son renflement et permettant de fixer la barre (2) le long de la rainure par coulissement.

9. Dispositif de production fruitière à souris fine selon la revendication 1, **caractérisé en ce que** le corps pivotant (5) présente des glissières longitudinales (26), par exemple sous forme de glissières à queue d'aronde, lesdites glissières longitudinales (26) permettant de disposer les barres (27) avec une contre-surface, grâce à laquelle les barres (27) sont maintenues dans les glissières longitudinales (26).

10. Dispositif de production fruitière à souris fine selon la revendication 1, **caractérisé en ce que** les dents éloignées du corps pivotant (5) présentent une première partie droite et une partie incurvée au niveau de l'extrémité extérieure.

11. Dispositif de production fruitière à souris fine selon la revendication 10, **caractérisé en ce que** les dents (1) sont disposées vers le haut à une extrémité d'un côté du corps pivotant, c'est-à-dire parallèlement à l'axe rotatif du corps pivotant (5) dans une première direction, les extrémités des dents (1) qui se trouvent de l'autre côté du corps pivotant étant disposées dans la direction opposée.

12. Dispositif de production fruitière à souris fine selon la revendication 10, **caractérisé en ce qu'**un embout arrière de la dent (1) présente un diamètre plus important, ledit embout étant conique vers l'extrémité.

13. Dispositif de production fruitière à souris fine selon la revendication 1, **caractérisé en ce que** les dents (1) sont fabriquées par procédé de moulage par injection et en matière plastique monolithique, les dents (1) étant rectilignes le long de leur axe longitudinal ou les dents (1) étant rectilignes le long de leur axe longitudinal dans une première partie et présentant un tracé incurvé à leur extrémité dans une deuxième partie.
